# EUROPÄISCHE PATENTSCHRIFT

(11) **EP 1 484 532 B1**
(45) Veröffentlichungstag und Bekanntmachung des Hinweises auf die Patenterteilung: **23.04.2008**
(21) Anmeldenummer: 04100495.3
(22) Anmeldetag: 10.02.2004
(51) Int. Cl.: F16H 3/72

(54) **Antriebsanordnung für ein Förderaggregat**
A drive assembly for a supply unit
Dispositif d'entraînement pour une ensemble d'alimentation

(30) Priorität: 15.02.2003 DE 10306418
(43) Veröffentlichungstag der Anmeldung: 08.12.2004
(73) Patentinhaber: DEERE & COMPANY, Moline, Illinois 61265-8098 (US)
(72) Erfinder: Rimkus, Manfred, 68199, Mannheim (DE); Schäfer, Helmut, 68775, Ketsch (DE)
(74) Vertreter: Holst, Sönke

(56) Entgegenhaltungen:
- DE-A1- 2 504 867
- DE-A1- 19 831 997
- US-A- 4 514 991
- US-A- 5 947 854

## Beschreibung

Die Erfindung betrifft eine Antriebsanordnung für ein Förderaggregat zur Förderung eines strömenden Mediums, insbesondere Luft oder Flüssigkeit, wobei die Antriebsanordnung einen drehzahlvariablen Antriebsmotor, einen stufenlos regelbaren Hilfsmotor und ein Summiergetriebe enthält und wobei das Summiergetriebe ausgangsseitig mit dem Förderaggregat und eingangsseitig mit dem Antriebsmotor und dem Hilfsmotor verbunden ist. Des Weiteren enthält die Antriebsanordnung eine den Hilfsmotor ansteuernde Steuereinheit und wenigstens einen Sensor zur Messung von wenigstens einer Zustandsgröße des strömenden Mediums.

Motorenbetriebene Fahrzeuge enthalten Förderaggregate, die zur Stromerzeugung und zur Kühlung oder Ölversorgung verschiedener Fahrzeugkomponenten eingesetzt werden. In der Regel werden derartige Förderaggregate, wie beispielsweise Lichtmaschinen, Lüfter oder Pumpen direkt vom Antriebsmotor bzw. vom Verbrennungsmotor angetrieben.

So sind Getriebeölpumpen üblicherweise direkt vom Verbrennungsmotor angetriebene Zahnradpumpen bzw. Konstantpumpen, die auf ausreichende Ölversorgung der Verbraucher für kritische bzw. ungünstigste Betriebspunkte, d.h. für Betriebspunkte mit niedriger Motordrehzahl, heißem Öl und/oder hohem Ölverbrauch ausgelegt werden müssen. Im Hinblick auf eine ausreichende Schmierung und Bereitstellung eines benötigten Systemdrucks, beispielsweise bei Getrieben oder im Hinblick auf einen benötigten Ladedruck, beispielsweise bei Kupplungen, muss in jedem Fall die Betriebssicherheit gewährleistet werden können. Da derartige Pumpen in linearer Abhängigkeit zum Antriebsmotor stehen und im praktischen Betrieb überwiegend höhere Drehzahlen gefahren werden, führt dies zum großen Teil zu unnötig hohen Ölversorgungen, die zu Lasten des Getriebewirkungsgrades gehen.
Um die Förderleistungen von Förderaggregaten besser an die tatsächlich von den Verbrauchern benötigten Fördermengen anzupassen wurden zum einen regelbare Pumpen, wie z. B. Flügelzellenpumpen oder Radialkolbenpumpen und zum anderen getrennte Pumpen für Schmieröl- und Druckversorgung eingesetzt, was sich jedoch bisher nicht auf dem Markt durchsetzen konnte.

Ähnliches gilt für Antriebe von Lüfterrädern, die zur Kühlung von Motorkühlwasser und Getriebe- bzw. Hydrauliköl eingesetzt werden. Aufgrund der linearen Abhängigkeit der Fördermenge von der Antriebsmotordrehzahl müssen derartige Lüfter entsprechend hoch dimensioniert werden, damit bei den durch den Motor zur Verfügung gestellten Drehzahlen für jeden Betriebspunkt eine ausreichend hohe Kühlleistung erfolgt. Dies führt oft zu großen Ausführungen in der Bauweise des Lüfters, was wiederum zu größeren Bauvolumina des Fahrzeugs aufgrund von Platzproblemen bei der Positionierung des Lüfters im Motorraum führt.

Durch die US 5,947,854 wurde eine Antriebsanordnung bekannt, die eine variable Steuerung des Förderaggregats ermöglichen soll. Demgemäß treibt ein mit konstanter Drehzahl laufender Antriebsmotor, insbesondere ein Elektromotor, sowie ein zusätzlicher mit variabler Drehzahl ansteuerbarer Motor/Generator über ein Summengetriebe ein Lüfterrad an. Durch Variation der Drehzahl des zusätzlichen Motor/Generators lässt sich die Lüfterdrehzahl ändern. Dabei überschreitet die Lüfterdrehzahl auch dann, wenn die Drehzahl des zusätzlichen Motor/Generators Null ist, nicht die Drehzahl des Antriebsmotors. Problematisch wirkt sich hierbei aus, dass die Anordnung der Antriebskomponenten sich auf den Einsatz eines Konstantantriebsmotors beschränkt und nicht dafür geeignet ist, den Drehzahlbereich eines Dieselmotors, der beispielsweise bei Landfahrzeugen, insbesondere bei landwirtschaftlichen oder industriellen Arbeitsfahrzeugen eingesetzt wird, abzudecken. Vielmehr lässt sich gemäß der US 5,947,854 die Drehzahl einer Pumpe oder eines Lüfters gegenüber einer konstanten Antriebsdrehzahl lediglich reduzieren. Des Weiteren ist die bekannte Antriebsanordnung wegen der moderaten Leistungsanteile des Zusatzantriebs an der gesamten Verbraucherleistung auf eine nur geringe Drehzahlspreizung der Pumpe bzw. des Lüfters beschränkt. Höhere Drehzahlspreizungen würden bei dieser Antriebsanordnung zu einem nicht annehmbaren Leistungsbedarf des Zusatzantriebs und damit zu einem schlechten Gesamtwirkungsgrad der Antriebsanordnung führen.

Die gattungsgemässe US 4,514,991 offenbart ebenfalls eine Antriebsanordnung, die eine variable Steuerung des Förderaggregats ermöglichen soll. Ein mit konstanter Drehzahl laufender Elektromotor, sowie ein zusätzlicher mit variabel ansteuerbarer Elektromotor bzw. Generator treiben über ein Summengetriebe einen Kompressor an. Durch Variation der Drehzahl des zusätzlichen Elektromotors bzw. Generators wird die Drehzahl des Kompressors gesteuert. Auch diese Anordnung ist für Konstantantriebe ausgebildet, wobei ein variabler Drehzahlbereich eines Antriebsmotors nicht berücksichtigt wird.

Die der Erfindung zugrunde liegende Aufgabe wird darin gesehen, eine Antriebsanordnung für ein Förderaggregat der eingangs genannten Art anzugeben, durch welche die vorgenannten Probleme überwunden werden. Insbesondere soll eine Antriebsanordnung für ein Förderaggregat geschaffen werden, die es ermöglicht, über einen variablen Drehzahlbereich des Antriebsmotors die Förderleistung des Förderaggregats in weiten Grenzen bedarfsgerecht zu variieren bzw. bedarfsgerecht einzustellen.
Die Aufgabe wird erfindungsgemäß durch die Lehre des Patentanspruchs 1 gelöst. Weitere vorteilhafte Ausgestaltungen und Weiterbildungen der Erfindung gehen aus den Unteransprüchen hervor.

Erfindungsgemäß wird die eingangs genannte Antriebsanordnung für ein Förderaggregat eines strömenden Mediums derart ausgebildet, dass der Antriebsmotor als Verbrennungsmotor ausgebildet ist und wenigstens ein Sensor zur Messung der Antriebsmotordrehzahl enthalten ist und die Förderleistung des Förderaggregats durch Ansteuerung des Hilfsmotors in Abhängigkeit von der wenigstens einen Zustandsgröße und der Antriebsmotordrehzahl steuerbar bzw. regelbar ist. Einerseits wird es ermöglicht, dass die Steuereinheit den Hilfsmotor in Abhängigkeit wenigstens einer Zustandsgröße, die den Bedarf der zu fördernden Menge des strömenden Mediums kennzeichnet, steuert oder regelt. Je nach Förderaggregat bzw. nach Art des zu fördernden Mediums kann die Zustandsgröße ein Druck, eine Temperatur oder auch eine Durchflussmenge oder Strömungsgeschwindigkeit sein, welche innerhalb vorgegebener Grenzen gehalten werden sollen. Durch den Sensor in Verbindung mit der Steuereinheit werden Steuersignale generiert, die eine Drehzahlveränderung am Hilfsmotor hervorrufen und über das Summiergetriebe einen variablen Antrieb des Fördeaggregats ermöglichen. Andererseits wird es ermöglicht, dass durch den Sensor zur Messung der Antriebsmotordrehzahl die Förderleistung des Förderaggregats durch Ansteuerung des Hilfsmotors in Abhängigkeit von der wenigstens einen Zustandsgröße und der Antriebsmotordrehzahl in weiten Grenzen steuerbar bzw. regelbar. Auf diese Weise wird zur Steuerung der Antriebsvorrichtung bzw. des Hilfsmotors zusätzlich zu der als Steuergröße herangezogenen Zustandsgröße des Fördermediums auch die Antriebsmotordrehzahl herangezogen, so dass eine antriebsmotordrehzahlabhängige Steuerung möglich ist. Durch antriebsmotordrehzahlabhängige Steuerung des Hilfsmotors können extreme Bedingungen betriebsgerecht angesteuert werden. So kann beispielsweise beim Starten des Antriebsmotors, insbesondere bei extremen Betriebsbedingungen in der Kälte, im Bereich der Startdrehzahlen (Drehzahlen unterhalb der Leerlaufdrehzahl) die Fördermenge des Förderaggregats und damit das für den Startvorgang hinderliche Schleppmoment durch Ansteuerung des Hilfsmotors auf Null gebracht bzw. reduziert werden. Im Bereich niedriger Antriebsmotordrehzahlen, insbesondere bei heißem oder überhitztem Fördermedium (z. B. Öl), kann hingegen die durch das Förderaggregat aufgebrachte Fördermenge deutlich gesteigert werden, um gegebenenfalls auch kurzfristig mehr Schmieröl zur Verfügung stellen zu können. Bei höheren Antriebsmotordrehzahlen, die insbesondere beim Betrieb unter hoher Last benötigt werden, kann die durch das Förderaggregat aufgebrachte Fördermenge gegenüber einer starren Anbindung des Förderaggregates an die Antriebsmotordrehzahl deutlich reduziert werden, um Energie einzusparen. Gleichfalls kann aber auch, falls die Betriebstemperaturen bzw. die Zustandstemperaturen des Fördermediums Grenzwerte erreichen, jederzeit die durch das Förderaggregat aufgebrachte Fördermenge auf Maximalfördermenge gesteigert werden.

Gemäß einer bevorzugten Ausgestaltung der Erfindung ist das Summiergetriebe als Planetensummiergetriebe ausgebildet. Dies bietet den Vorteil einer einfachen Anbindung des Hilfsmotors in die Antriebsanordnung und führt zu einer kompakten Bauweise. Des Weiteren sind dadurch vielfältige Anschlussmöglichkeiten für den Antriebsmotor, den Hilfsmotor und das Förderaggregat gegeben.

Gemäß einer bevorzugten Ausgestaltung der Erfindung ist der Antriebsmotor mit einem Hohlrad, der Hilfsmotor mit einem Sonnenrad und das Förderaggregat mit einem Planetenträger des Planetensummiergetriebes verbunden.
Durch diese Anordnung wird gewährleistet, dass der Hilfsmotor nur einen Bruchteil der Antriebsleistung des Förderaggregats abdecken muss aber gleichzeitig einen ausreichend großen Drehzahlverstellbereich des Förderaggregats bewirkt. Über die Abstimmung der Förderaggregatbaugröße, der Leistung und des Verstellbereichs des Hilfsmotors, der Standübersetzung des Summiergetriebes und der Übersetzung zwischen Antriebsmotor und Hohlrad lässt sich das Betriebskennfeld des Antriebs in weiten Grenzen variieren und an die Erfordernisse anpassen.

Es sind aber auch andere Varianten denkbar, wie z. B. die Verbindung des Antriebsmotors mit der Sonne oder dem Planetenträger, wobei das Förderaggregat mit dem Hohlrad oder dem Planetenträger bzw. mit dem Hohlrad oder der Sonne verbunden werden kann und der Hilfsmotor entsprechend der gewählten Variante mit der noch nicht besetzten Komponente verbunden wird. Auch die Verbindung des Förderaggregats mit der Sonne bei Verbindung des Hilfsmotors mit dem Planetenträger und des Antriebsmotors mit dem Hohlrad ist denkbar.

Gemäß einer weiteren Ausgestaltung der Erfindung wird zwischen Antriebsmotor und dem antriebsmotorseitigen Eingang des Summiergetriebes, insbesondere dessen Hohlrad, eine Zahnradstufe zur Antriebsüber- oder Antriebsuntersetzung und/oder zur Antriebsdrehrichtungsumkehr angeordnet. Es kann auch die Anordnung einer Zahnradstufe zwischen den anderen Antriebskomponenten und Anschlüssen bzw. Verbindungsmöglichkeiten des Plantetenradgetriebes zweckmäßig sein.

Die Antriebsübersetzung kann durch eine Räderkette bestehend aus zwei oder mehr Zahnrädern gebildet sein. Sie ermöglicht die Ausbildung eines Achsabstandes zwischen Antriebsmotor und Summiergetriebe, die Ausbildung einer Übersetzungsstufe am Summiergetriebeeingang und die Ausbildung einer Richtungsumkehr der Eingangsdrehzahl für das Summiergetriebe.

Des Weiteren ist auch die Kombination mit mehrstufigen Getrieben möglich sowie die Anordnung eines zweiten Planetengetriebes oder die Verwendung eines mehrstufigen Planetengetriebes als Summierungsgetriebe.

Gemäß einer bevorzugten Ausgestaltung der Erfindung wird als Förderaggregat eine Pumpe oder ein Lüfter eingesetzt, wobei die Pumpe insbesondere der Förderung von Schmier- oder Steuerölen oder von Kühlflüssigkeiten, wie z.B. Wasser, bzw. der Lüfter zur Förderung von Luft dient. Dadurch kann die erfindungsgemäße Antriebsanordnung vorzugsweise zum Antrieb von Förderaggregaten eingesetzt werden, die einer Kühlung von Antriebskomponenten, einer Förderung von Schmierflüssigkeiten oder einer Bereitstellung von Druckmitteln dienen.

Gemäß einer weiteren bevorzugten Ausgestaltung der Erfindung ist der wenigstens eine Sensor zur Erfassung von Zustandsgrößen, die zur Steuerung der Antriebsvorrichtung bzw. des Hilfsmotors herangezogen werden, als Sensor zur Messung des Drucks und/oder der Temperatur und/oder der Durchflussmenge und/oder der Strömgeschwindigkeit des strömenden Mediums ausgebildet. So kann beispielsweise ein Systemdruck der Hydraulik- oder Schmierflüssigkeit oder die Temperatur dieser Flüssigkeiten sowie die Temperatur von Kühlflüssigkeiten oder auch die Durchflussmenge und Strömungsgeschwindigkeit dieser Flüssigkeiten sowie bei Einsatz eines Lüfters auch die Temperatur, Strömungsgeschwindigkeit oder Durchflussmenge bzw. Durchströmmenge der zur Kühlung geförderten Luft als Steuergröße herangezogen werden.

Gemäß einer bevorzugten Ausgestaltung der Erfindung wird die Förderleistung des Förderaggregats durch Ansteuerung des Hilfsmotors entsprechend eines vorgebbaren Förderleistungskennfeldes in Abhängigkeit einer Zustandsgröße des strömenden Mediums, vorzugsweise der Temperatur, und der Antriebsmotordrehzahl gesteuert oder geregelt. Hierbei wird für jede im praktischen Betrieb vorkommende Kombination dieser beiden Parameter eine erforderliche Förderleistung des Förderaggregats und damit eine anzusteuernde Drehzahl des Hilfsmotors beispielsweise empirisch ermittelt und in einem Förderleistungskennfeld eingetragen. Das Förderleistungskennfeld kann beispielsweise in einem elektronischen Speicher abgelegt sein, auf den die Steuereinheit bei der Generierung von Steuersignalen zurückgreift. Vorzugsweise enthält das Förderleistungskennfeld temperaturabhängige und über der Antriebsmotordrehzahl veränderliche Sollwertkurven, die innerhalb der vorgegebenen Betriebsgrenzen des Förderaggregats, z. B. minimale und maximale Fördermenge, die Fördermenge des Förderaggregats betriebsgerecht vorgeben bzw. die für die Steuereinheit benötigten Sollwerte liefert. Auf diese Weise kann ein breites Betriebsspektrum abgedeckt und das Förderaggregat abweichend von einer rein linearen Förderkennlinie betrieben werden. Vorteilhaft wirkt sich dabei aus, dass die benötigte Sensorik (Drehzahlmesser und Temperaturmessstelle) in modernen Fahrzeugen ohnehin vorhanden ist. Wird zusätzlich der Systemdruck gemessen, was bei modernen Getrieben ebenfalls üblich ist, oder wird das Unterschreiten eines Grenzwertes dieses Druckes registriert, dann kann hieraus zusätzlich ein Eingangssignal für die Drehzahlsteuerung des Hilfsmotors erfolgen, derart, dass bei Unterschreiten des Grenzwertes grundsätzlich oder abhängig von Drehzahlen und/oder Temperaturen eine erhöhte Fördermenge oder auch die Maximalfördermenge des Förderaggregats angestrebt wird.

Gemäß einer weiteren Ausgestaltung der Erfindung wird die Förderleistung des Förderaggregats durch Ansteuerung des Hilfsmotors entsprechend eines vorgebbaren Zustandssollwertes, vorzugsweise eines Solldrucks des strömenden Mediums, oder einer antriebsmotordrehzahlabhängigen Zustandssollwertkurve, vorzugsweise einer Solldruckkurve des strömenden Mediums, gesteuert oder geregelt. So muss beispielsweise ein Schmiermittel oder eine Betriebsflüssigkeit für ein Getriebe einen bestimmten Betriebsdruck oder Systemdruck aufweisen, der für die verschiedenen Betriebsbedingungen durch das Förderaggregat bereitgestellt werden muss. Durch einen der Steuereinheit vorgegebenen Solldruck, der mit einem durch den Sensor ermittelten Betriebsdruck abgeglichen wird kann der Hilfsmotor derart geregelt werden, dass sich der für das Schmiermittel oder für die Betriebsflüssigkeit vorgegebene Solldruckwert einstellt. Dies bietet den Vorteil, dass das in einem Getriebesteuerblock herkömmlicherweise enthaltene Druckregelventil gänzlich entfallen und statt dessen über eine Druckmessung im Getriebesteuerblock ein geschlossener Regelkreis zur Ansteuerung des Hilfsmotors aufgebaut werden kann, mit dem Ziel, die Fördermenge des Förderaggregats so zu regulieren, dass sich in Verbindung mit den Staudrücken/Durchflusswiderständen im Getriebesteuersystem ein gewünschtes bzw. vorgebbares Druckniveau unter allen vorkommenden Betriebsbedingungen einstellt. In Kombination mit einem Sensor zur Erfassung der Antriebsmotordrehzahl kann des Weiteren auch eine Solldruckkurve zur Regelung des Hilfsmotorantriebs herangezogen werden. Damit können für verschiedene Drehzahlbereiche des Antriebsmotors unterschiedliche Solldruckwerte in einer antriebsmotordrehzahlabhängigen Solldruckkurve vorgegeben, in einem elektronischen Speicher abgelegt und der Steuereinheit zur Steuerung oder Regelung des Hilfsmotors zugeführt werden. So kann beispielsweise für den Startvorgang bei niedrigen Drehzahlen ein geringerer Solldruck vorgegeben werden, der mit zunehmender Drehzahl ansteigt und erst bei höheren Drehzahlen, oberhalb einer Leerlaufdrehzahl, einen Maximalwert annimmt, wobei die Leerlaufdrehzahl die untere Drehzahlgrenze des Antriebsmotors im normalen Betrieb ist.

Gemäß einer weiteren bevorzugten Ausgestaltung der Erfindung wird zwischen Hilfsmotor und Summiergetriebe ein Freilauf angeordnet, welcher ein auf den Hilfsmotor wirkendes Drehmoment aufnimmt. Diese Anordnung ist beispielsweise dann von Vorteil, wenn nur eine Drehrichtung des Hilfsmotors für die Verstellung bzw. Steuerung des Förderaggregats ausgenutzt wird und ein bei Stillstand des Hilfsmotors aufzubringendes Stützmoment nicht vom Hilfsmotor selbst aufgebracht werden muss. Ein derartiger Freilauf kann beispielsweise an der Antriebswelle des Hilfsmotors zum Sonnenrad vorgesehen sein, der den Antrieb vom Hilfsmotor zum Sonnenrad erlaubt, aber bei rückwärtigem Momentenfluss das Sonnenrad direkt am Gehäuse abstützt.

Der Vorteil dieser erfindungsgemäßen Antriebsanordnung besteht im Besonderen darin, die für den Antrieb eines Förderaggregats erforderliche Leistung im vorwiegend genutzten Drehzahlbereich des Antriebsmotors (ca. 70% bis 90% der Nenndrehzahl) auf bis zu 60% der heute bei starren (linearen) Antriebsanordnungen benötigten Leistung zu reduzieren. Darüber hinaus bietet eine derartige Antriebsanordnung den Vorteil, die Fördermenge des Förderaggregats im gesamten Drehzahlbereich des Antriebsmotors in weiten Grenzen zu variieren und damit bedarfsgerecht einstellen zu können. Im Vergleich zu einem konventionellem linearen Antrieb zwischen Antriebsmotor und Förderaggregat können mit der erfindungsgemäßen Antriebsanordnung beispielsweise in niedrigen Drehzahlbereichen, unter Verwendung desselben Förderaggregats, deutlich höhere Förderleistungen abgerufen werden, hingegen bei hohen Antriebsmotordrehzahlen nicht notwendige, überhöhte Förderleistungsabrufe vermieden werden und somit die gesamte Antriebsanordnung verbrauchsoptimiert einsetzbar ist.

Anhand der Zeichnung, die ein Ausführungsbeispiel der Erfindung zeigt, werden nachfolgend die Erfindung sowie weitere Vorteile und vorteilhafte Weiterbildungen und Ausgestaltungen der Erfindung näher beschrieben und erläutert.

Es zeigt:
- Fig. 1: den schematischen Aufbau einer erfindungsgemäßen Antriebsanordnung mit einer Steuereinheit für einen Hilfsmotor,
- Fig. 2: ein Förderleistungskennfeld für eine erfindungsgemäße Antriebsanordnung mit einer vorwiegend temperatur- und antriebsmotordrehzahlabhängigen Ansteuerung des Hilfsmotors und
- Fig. 3: eine Solldruckkurve für eine erfindungsgemäße Antriebsanordnung mit einer vorwiegend druckabhängigen Steuerung bzw. Regelung des Hilfsmotors.

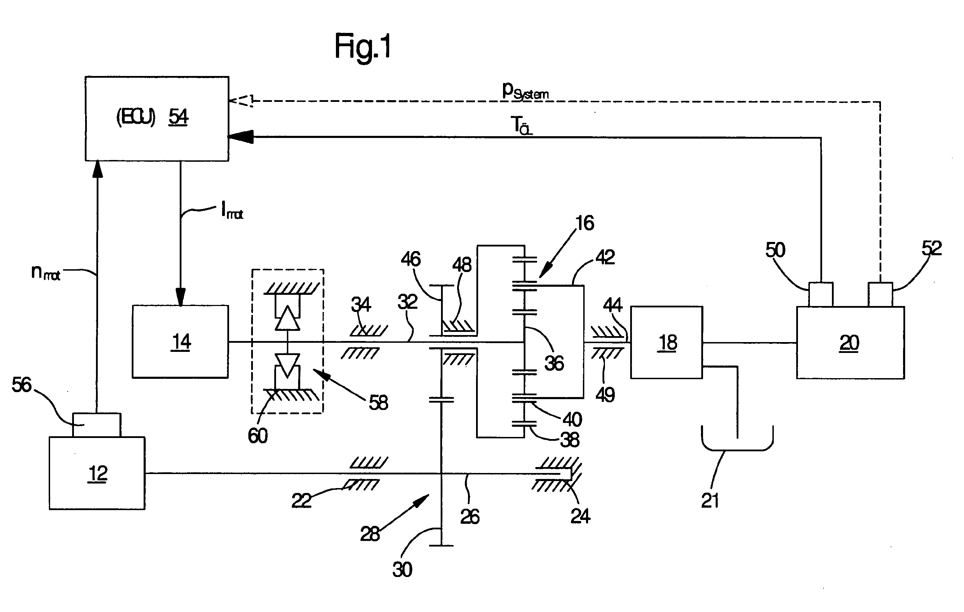

Die in Fig. 1 schematisch dargestellte Antriebsanordnung 10 enthält einen als Verbrennungsmotor 12 ausgebildeten Antriebsmotor für ein Arbeitsfahrzeug, einen als Elektromotor 14 ausgebildeten Hilfsmotor, ein als Planetengetriebe 16 ausgebildetes Summiergetriebe sowie ein als Pumpe 18 ausgebildetes Förderaggregat, welches einen für den Betrieb eines Getriebes notwendigen Getriebesteuerblock 20 mit Drucköl versorgt und Betriebsflüssigkeit aus einem Flüssigkeitsreservoir 21 ansaugt.

Der Verbrennungsmotor 12 der Antriebsanordnung 10 ist an eine auf zwei Wellenlagern 22, 24 gelagerte ersten Antriebswelle 26 gekoppelt. Die erste Antriebswelle 26 ist drehfest mit einem einer Zahnradstufe 28 zugehörigem ersten Zahnrad 30 verbunden.

Der Elektromotor 14 der Antriebsanordnung 10 ist mit einer zweiten Antriebswelle 32 verbunden, die auf einem Wellenlager 34 gelagert und mit einem Sonnerad 36 des Planetengetriebes 16 verbunden ist.

Das Planetengetriebe 16 enthält des Weiteren ein Hohlrad 38 sowie mehrere Planeten 40, die auf einem Planetenträger 42 gelagert sind. Der Planetenträger 42 ist drehfest mit einer Abtriebswelle 44 verbunden. An das Hohlrad 38 ist ein zweites, zur Zahnradstufe 28 zugehöriges Zahnrad 46 gekoppelt, welches direkt mit dem ersten Zahnrad 30 in Eingriff steht. Das Hohlrad 38 und das zweite Zahnrad 46 bilden eine Einheit und sind gemeinsam auf der zweiten Antriebswelle 32 gelagert. Zur weiteren Lagerung des Planetengetriebes 16 bzw. der zweiten Abtriebswelle 32 werden weitere Lager 48 und 49 verwendet, wobei auch andere bekannte Lagerungsarten verwendet werden könnten, was hier nicht weiter von Belang ist.

Die Abtriebswelle 44 am Planetenträger 42 ist fest mit der Pumpe 18 verbunden, wobei die Pumpe 18 eine Betriebsölflüssigkeit zum Getriebesteuerblock 20 fördert.

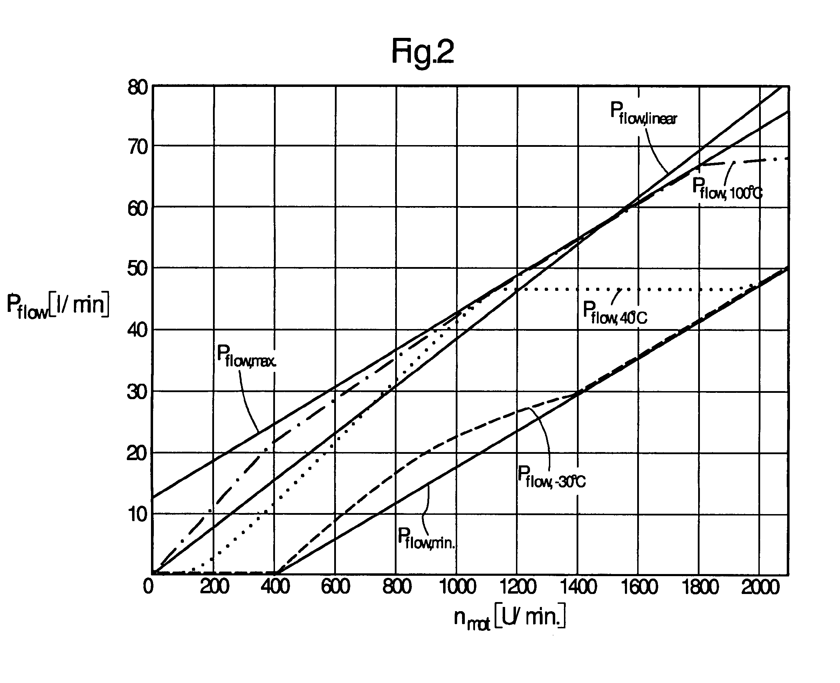

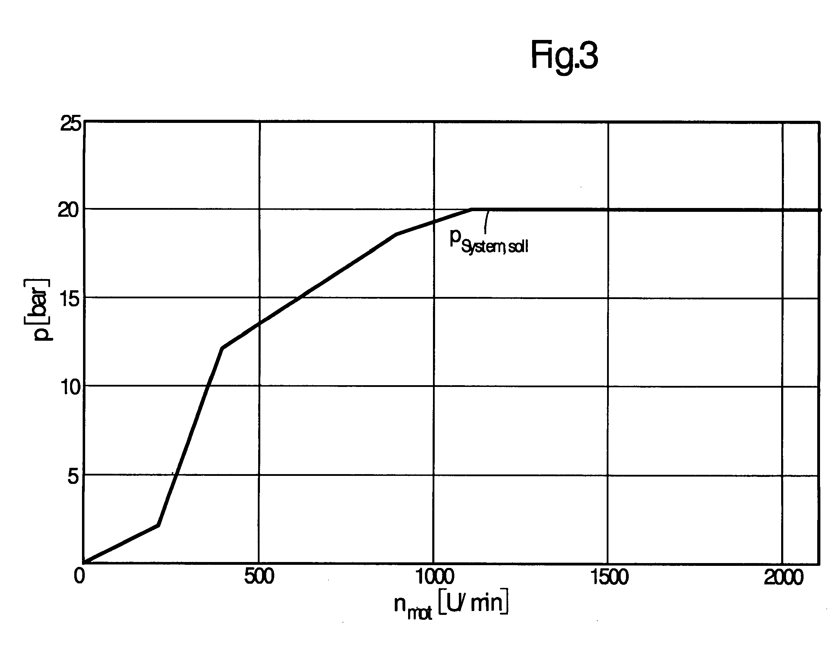

Der Getriebesteuerblock 20 enthält einen Temperatursensor 50 und/oder einen Drucksensor 52, welche mit einer elektronischen Steuereinheit 54 für den Elektromotor 14 verbunden sind. Des Weiteren ist am Verbrennungsmotor 12 ein Drehzahlsensor 56 vorgesehen, der ebenfalls mit der Steuereinheit 54 verbunden ist. Die Steuereinheit 54 enthält einen internen Steuerrechner (nicht gezeigt), der mit einem Speicher (nicht gezeigt) verbunden ist, in dem die für die Steuereinheit notwendigen Kennfelder, Sollwerte bzw. Sollwertkurven abgelegt sind. In Abhängigkeit der gemessenen Zustandswerte, wie z.B. Betriebsöltemperatur T_{öl}, Systemdruck p_{System}, und Antriebsmotordrehzahl nₘₒₜ, berechnet bzw. ermittelt der interne Steuerrechner je nach Steuerungs- bzw. Regelungsstrategie die erforderlichen Steuergrößen, anhand derer die Steuereinheit 54 einen elektrischen Steuerstrom Iₘₒₜ generiert. Im Wesentlichen wird nach zwei unterschiedlichen Strategien zur Steuerung bzw. Regelung des Elektromotors 14 verfahren, die wie folgt anhand des Kennfeldes in Fig. 2 und anhand der Sollwertkurve in Fig. 3 erläutert werden.

Für eine auf einer Drehzahl- und Temperatursteuerung basierende Steuerstrategie ist in Fig. 2 beispielhaft ein Förderleistungskennfeld abgebildet, anhand dessen die Steuerstrategie für die Generierung des elektrischen Steuerstroms Iₘₒₜ geschildert wird. In dem Kennfeld ist die Förderleistung P_{flow} der Pumpe 18 über der Antriebsmotordrehzahl nₘₒₜ aufgetragen. Die eingetragenen Geraden P_{flow,max} und P_{flow,min} kennzeichnen die maximale bzw. die minimale Förderleistung der verwendeten Pumpe in Abhängigkeit von der Antriebsmotordrehzahl nₘₒₜ. Die Gerade P_{flow,linear} kennzeichnet zum Vergleich die Förderleistung einer gleichartigen Pumpe 18, die linear bzw. starr (konventionell) vom Antriebsmotor angetrieben ist. Zwischen den Geraden P_{flow,max} und P_{flow,min} zeichnet sich ein Bereich ab, in dem durch entsprechende Steuerung des Elektromotors 14 die Förderleistung P_{flow} der Pumpe 18 steuerbar bzw. variierbar ist. Exemplarisch sind drei Steuerkurven P_{flow},-30°C, P_{flow,40°C}, und P_{flow,100°C} abgebildet, anhand derer die Förderleistung P_{flow} der Pumpe 18 für die verschiedenen Betriebsöltemperaturen -30°C, 40°C und 100°C gesteuert wird. Es kann für jede beliebige Temperatur eine Steuerkurve vorgegeben werden, mit der die gewünschten Förderleistungen P_{flow} der Pumpe 18 angesteuert werden können. Für extrem kalte Betriebsbedingungen um -30°C gibt die Steuerkurve P_{flow,-30°C} beispielsweise vor, dass die Förderleistung P_{flow} der Pumpe 18 für Antriebsmotordrehzahlen nₘₒₜ unterhalb von 400 U/min auf Null gehalten wird, um den Startvorgang zu erleichtern, indem das bei Betrieb der Pumpe 18 entstehende Schleppmoment verhindert wird. Die Steuereinheit 54 ermittelt dann anhand der vorherrschenden Eingangsgrößen nₘₒₜ (z.B. nₘₒₜ=200 U/min) und T_{öl} (T_{öl}=-30°C) die durch die Steuerkurve für diesen Betriebspunkt vorgegebene Förderleistung P_{flow} (P _{flow}=0 ) und generiert, unter Berücksichtigung der durch den Drehzahlsensor 56 gelieferten Antriebsmotordrehzahl nₘₒₜ=200 und unter Berücksichtigung geometrischer Vorgaben bezüglich der Übersetzungsverhältnisse, den entsprechenden Steuerstrom I_{mot(200,-30)}. Der generierte Steuerstrom I_{mot(200,-30)} erzeugt dann die durch den Elektromotor aufzubringende Drehzahl und Drehrichtung, um die Förderleistung P_{flow} der Pumpe 18 auf Null zu halten. Für andere Betriebspunkte wird entsprechend ähnlich verfahren. So wird durch das Förderleistungskennfeld bei Betriebsöltemperaturen um -30°C und einer Antriebsmotordrehzahl von 1000 U/min eine Förderleistung P_{flow} der Pumpe 18 von ca. 22,5 L/min vorgegeben. Der von der Steuereinheit 54 generierte Steuerstrom I_{mot(1000,-30)} erzeugt dann die durch den Elektromotor aufzubringende Drehzahl und Drehrichtung, um die Förderleistung P_{flow} der Pumpe 18 auf 22,5 Liter/min zu bringen.

Aus dem Förderleistungskennfeld geht des Weiteren hervor, dass im Vergleich zu einer linear (starr) angetriebenen Pumpe die Förderleistung sehr gut an die Betriebserfordernisse angepasst werden kann. So wird insbesondere bei niedrigen Antriebsmotordrehzahlen nₘₒₜ und höheren Betriebsöltemperaturen T_{öl} (T_{öl}=100°C) eine deutlich über der "linearen Pumpenförderkennlinie" P_{flow,linear} liegende Förderleistung P_{flow} der Pumpe 18 angesteuert, um den Betriebserfordernissen besser gerecht werden zu können. Anders ist es bei höheren Antriebsmotordrehzahlen nₘₒₜ, dort kann abweichend von der "linearen Pumpenförderkennlinie" P_{flow,linear} eine geringere Förderleistung P_{flow} der Pumpe 18 angesteuert werden um überflüssige, d. h. über den Betriebserfordernissen liegende Förderleistung P_{flow} einzusparen.

Wird zusätzlich der Systemdruck gemessen, was bei modernen Getrieben ebenfalls üblich ist, oder wird das Unterschreiten eines Grenzwertes dieses Druckes registriert, dann kann hieraus zusätzlich ein Eingangssignal für die Drehzahlsteuerung des Hilfsmotors erfolgen, derart, dass bei Unterschreiten des Grenzwertes grundsätzlich oder abhängig von Drehzahlen und/oder Temperaturen eine erhöhte Fördermenge oder auch die Maximalfördermenge des Förderaggregats angestrebt wird.

Die auf einer Drehzahl- und Temperatursteuerung basierende Steuerstrategie ermöglicht es, die Förderleistung P_{flow} der Pumpe 18 in einem relativ breiten Kennfeld zu variieren und gegenüber einer herkömmlichen linear angetriebenen Pumpe weitestgehend optimiert auf die verschiedenen Betriebserfordernisse einzugehen.

In Fig. 3 ist eine beispielhafte antriebsmotordrehzahlabhängige Sollwertdruckkurve abgebildet, auf die eine alternative auf Druckmessung ausgerichtete Regelstrategie basiert. Anders als bei der auf Drehzahl- und Temperatursteuerung basierenden Steuerstrategie wird hier ein antriebsmotordrehzahlabhängiger Sollwert P_{System, soll} für den Systemdruck P_{System} des Getriebesteuerblocks 20 vorgegeben, der sich durch Regelung der Drehzahl des Elektromotors 14 bzw. durch Regelung der Förderleistung P_{flow} der Pumpe 18 für die unterschiedlichen Antriebsmotordrehzahlen nₘₒₜ einstellen soll. Als Eingangsgrößen für die Steuerung bzw. Regelung des Elektromotors 14 dienen in diesem Fall für jeden Regelzyklus die vom Drehzahlmesser 56 gelieferte Antriebsmotordrehzahl nₘₒₜ sowie der durch den Drucksensor 52 ermittelte aktuell vorherrschende Systemdruck P_{System}. Entsprechend der Antriebsmotordrehzahl nₘₒₜ wird aus der im Speicher des Steuerrechners vorgegebenen Sollwertkurve der für die Antriebsmotordrehzahl nₘₒₜ zugehörige Solldruckwert p_{System, soll} ermittelt und vom Steuerrechner mit dem Systemdruck p_{System} verglichen. Der Differenzwert der beiden Größen (p_{System, soll}, p_{System}) dient als Regelgröße für den Steuerstrom Iₘₒₜ des Elektromotors 14. In Abhängigkeit von dieser Regelgröße wird nun der Elektromotor 14 schneller oder langsamer angetrieben, bis sich der vorgegebene Solldruckwert p_{System,soll} einstellt. Dieser Regelzyklus wird entsprechend vorgegebener Regelintervalle wiederholt, so dass in allen Betriebszuständen der entsprechend der Sollwertkurve vorgegebene Sollwert p_{System, soll} für den Systemdruck p_{System} des Getriebesteuerblocks 20 eingehalten wird.

Wie dem Diagramm in Fig. 3 zu entnehmen ist, steigt der vorgegebene Sollwert p_{System, soll} für kleinere Drehzahlen überproportional zur Antriebsmotordrehzahl nₘₒₜ an, bis er bei höheren Antriebsmotordrehzahlen nₘₒₜ einem Maximalsollwert von 20 bar erreicht und unabhängig von der weiter steigenden Antriebsmotordrehzahl nₘₒₜ diesen Wert beibehält. Ein Vorteil der auf Druckmessung ausgerichteten Regelstrategie besteht in der Einsparung eines Druckregelventils und die Möglichkeit bedarfsgerecht den Druck einstellen zu können unabhängig von Einflußgrößen wie z.B. Temperatur und Viskosität des Öls.

Auch wenn die Erfindung lediglich anhand eines Ausführungsbeispiels beschrieben wurde, erschließen sich für den Fachmann im Lichte der vorstehenden Beschreibung sowie der Zeichnung viele verschiedenartige Alternativen, Modifikationen und Varianten, die unter die vorliegende Erfindung fallen. So können beispielsweise ergänzend zu der auf Druckmessung ausgerichteten Steuer- bzw. Regelstrategie weitere Sollwertkurven vorgegeben werden, die in Abhängigkeit der Betriebsöltemperatur T_{öl} zur Druckregelung herangezogen werden. Als Eingangsgröße für die Steuereinheit 54 dient dann des Weiteren auch eine vom Temperatursensor 50 gelieferte Betriebsöltemperatur T_{öl}. In Abhängigkeit von der Betriebsöltemperatur T_{öl} ist dann auch eine Kaltstarthilfe für den Antriebsmotor 12 möglich, indem bei Unterschreiten eines Temperaturgrenzwertes der Solldruckwert auf Null gesetzt wird und somit der Hilfsmotor 14 derart angesteuert wird, dass ein durch die Pumpe 18 erzeugtes Schleppmoment reduziert bzw. aufgehoben werden kann.

In einem weiteren Ausführungsbeispiel der Erfindung, wie in Fig. 1 in gestrichelter Form ergänzend dargestellt ist, wird zwischen Hilfsmotor 14 und Planetengetriebe 16 ein Freilauf 58 angeordnet, welcher ein auf den Hilfsmotor 14 wirkendes Drehmoment aufnimmt. Diese Anordnung ist von Vorteil, wenn nur eine Drehrichtung des Hilfsmotors 14 für die Verstellung bzw. Steuerung des Förderaggregats 18 ausgenutzt wird und ein bei Stillstand des Hilfsmotors 14 aufzubringendes Stützmoment nicht vom Hilfsmotor 14 selbst aufgebracht werden muss. Ein derartiger Freilauf 58 kann beispielsweise an der Antriebswelle 32 des Hilfsmotors 14 zum Sonnenrad 36 vorgesehen sein. Dadurch wird ein Antrieb des Sonnenrades 36 vom Hilfsmotor 14 erlaubt, aber ein rückwärtiger Momentenfluss über das Sonnenrad direkt durch die gehäuseseitige Verbindung 60 des Freilaufs 58 abgefangen.

## Patentansprüche

1. Antriebsanordnung für ein Förderaggregat (18) zur Förderung eines strömenden Mediums, insbesondere Luft oder Flüssigkeit, wobei die Antriebsanordnung (10) einen drehzahlvariablen Antriebsmotor (12), einen stufenlos regelbaren Hilfsmotor (14) und ein Summiergetriebe (16) enthält und wobei das Summiergetriebe (16) ausgangsseitig mit dem Förderaggregat (18) und eingangsseitig mit dem Antriebsmotor (12) und dem Hilfsmotor (14) verbunden ist, die Antriebsanordnung (10) des Weiteren eine den Hilfsmotor (14) ansteuernde Steuereinheit (54) enthält und wenigstens ein Sensor (50, 52) zur Messung von wenigstens einer Zustandsgröße des strömenden Mediums enthalten ist, **dadurch gekennzeichnet, dass** der Antriebsmotor (12) als Verbrennungsmotor ausgebildet ist und wenigstens ein Sensor (56) zur Messung der Antriebsmotordrehzahl enthalten ist und die Förderleistung des Förderaggregats (18) durch Ansteuerung des Hilfsmotors (14) in Abhängigkeit von der wenigstens einen Zustandsgröße und der Antriebsmotordrehzahl steuerbar bzw. regelbar ist.

2. Antriebsanordnung nach Anspruch 1, **dadurch gekennzeichnet, dass** das Summiergetriebe (16) ein Planetensummiergetriebe ist.

3. Antriebsanordnung nach Anspruch 2, **dadurch gekennzeichnet, dass** der Antriebsmotor (12) mit einem Hohlrad (38), der Hilfsmotor (14) mit einem Sonnenrad (36) und das Förderaggregat (18) mit einem Planetenträger (42) des Planetensummiergetriebes (16) verbunden ist.

4. Antriebsanordnung nach einem der vorhergehenden Ansprüche, **dadurch gekennzeichnet, dass** zwischen Antriebsmotor (12) und dem antriebsmotorseitigen Eingang des Summiergetriebes eine Zahnradstufe (28) zur Antriebsüber- oder Antriebsuntersetzung und/oder zur Antriebsdrehrichtungsumkehr angeordnet ist.

5. Antriebsanordnung nach einem der vorhergehenden Ansprüche, **dadurch gekennzeichnet, dass** das Förderaggregat (18) eine Pumpe oder ein Lüfter, insbesondere zur Förderung von Öl oder Kühlflüssigkeiten bzw. zur Förderung von Luft ist.

6. Antriebsanordnung nach einem der vorhergehenden Ansprüche, **dadurch gekennzeichnet, dass** der wenigstens eine Sensor (50, 52) zur Messung von wenigstens einer Zustandsgröße ein Sensor zur Messung des Drucks und/oder der Temperatur und/oder der Durchflussmenge und/oder der Strömgeschwindigkeit des strömenden Mediums ist.

7. Antriebsanordnung nach einem der vorhergehenden Ansprüche, **dadurch gekennzeichnet, dass** die Förderleistung des Förderaggregats (18) durch Ansteuerung des Hilfsmotors (14) entsprechend eines vorgebbaren Förderleistungskennfeldes in Abhängigkeit der Temperatur des strömenden Mediums und der Antriebsmotordrehzahl steuerbar oder regelbar ist.

8. Antriebsanordnung nach einem der vorhergehenden Ansprüche, **dadurch gekennzeichnet, dass** die Förderleistung des Förderaggregats (18) durch Ansteuerung des Hilfsmotors (14) entsprechend eines vorgebbaren Zustandssollwertes, vorzugsweise eines Solldrucks des strömenden Mediums, oder einer antriebsmotordrehzahlabhängigen Zustandssollwertkurve, vorzugsweise einer Solldruckkurve des strömenden Mediums, steuerbar oder regelbar ist.

9. Antriebsanordnung nach einem der vorhergehenden Ansprüche, **dadurch gekennzeichnet, dass** zwischen Hilfsmotor (14) und Summiergetriebe ein Freilauf (58) angeordnet ist, welcher ein auf den Hilfsmotor (14) wirkendes Drehmoment aufnimmt.

## Claims

1. Drive assembly for a supply unit (18) for supplying a flowing medium, in particular air or fluid, the drive assembly (10) comprising a variable-speed drive motor (12), a continuously variable auxiliary motor (14) and a compound gear train (16), and the compound gear train (16) being connected on the output side to the supply unit (18) and on the input side to the drive motor (12) and the auxiliary motor (14), the drive assembly (10) further comprising a control unit (54) controlling the auxiliary motor (14) and at least one sensor (50, 52) for measuring at least one state variable of the flowing medium, **characterized in that** the drive motor (12) is embodied as an internal combustion engine and at least one sensor (56) is provided for measuring the speed of the drive motor, it being possible to control or regulate the delivery capacity of the supply unit (18) for controlling the auxiliary motor (14) as a function of at least one state variable and the speed of the drive motor.

2. Drive assembly according to Claim 1, **characterized in that** the compound gear train (16) is a compound planetary gear train.

3. Drive assembly according to Claim 2, **characterized in that** the drive motor (12) is connected to an internal gear (38), the auxiliary motor (14) to a sun gear (36) and the supply unit (18) to the planet carrier (42) of the compound planetary gear train (16).

4. Drive assembly according to any one of the preceding claims, **characterized in that** a gear stage (28) for gearing the drive up or down and/or for reversing the direction of the drive is arranged between the drive motor (12) and the drive motor-side input of the compound gear train.

5. Drive assembly according to any one of the preceding claims, **characterized in that** the supply unit (18) is a pump, especially one for the delivery of oil or coolants, or a fan, especially one for the delivery of air.

6. Drive assembly according to any one of the preceding claims, **characterized in that** at least one sensor (50, 52) for measuring at least one state variable is a sensor for measuring the pressure and/or the temperature and/or the flow rate and/or the flow speed of the flowing medium.

7. Drive assembly according to any one of the preceding claims, **characterized in that** the delivery capacity of the supply unit (18) can be controlled or regulated by controlling the auxiliary motor (14) according to a pre-definable delivery capacity characteristics map as a function of the temperature of the flowing medium and the drive motor speed.

8. Drive assembly according to any one of the preceding claims, **characterized in that** the delivery capacity of the supply unit (18) can be controlled or regulated by controlling the auxiliary motor (14) according to a pre-definable state set-point, preferably a set-point pressure of the flowing medium, or a state set-point curve varying as a function of the drive motor speed, preferably a set-point curve of the flowing medium.

9. Drive assembly according to any one of the preceding claims, **characterized in that** a freewheel clutch (58), which absorbs a torque acting on the auxiliary motor (14), is arranged between the auxiliary motor (14) and the compound gear train.

## Revendications

1. Système d'entraînement pour un organe de transport (18) destiné à transporter un milieu fluide, en particulier l'air ou un liquide, le système d'entraînement (10) comportant un moteur d'entraînement (12) à vitesse de rotation variable, un moteur auxiliaire (14) à réglage progressif et un engrenage sommateur (16), et ledit engrenage sommateur (16) étant relié du côté sortie à l'organe de transport (18) et du côté admission au moteur d'entraînement (12) et au moteur auxiliaire (14), le système d'entraînement (10) comporte en outre une unité de commande (54) activant le moteur auxiliaire (14) et au moins un capteur (50, 52) destiné à mesurer au moins une grandeur d'état du milieu fluide, **caractérisé en ce que** le moteur d'entraînement (12) est réalisé sous la forme d'un moteur à combustion interne et comporte au moins un capteur (56) destiné à mesurer la vitesse de rotation du moteur d'entraînement, et la puissance de transport de l'organe de transport (18) peut être commandée ou réglée par l'activation du moteur auxiliaire (14) en fonction d'au moins une grandeur d'état et de la vitesse de rotation du moteur d'entraînement.

2. Système d'entraînement selon la revendication 1, **caractérisé en ce que** l'engrenage sommateur (16) est un engrenage sommateur planétaire.

3. Système d'entraînement selon la revendication 2, **caractérisé en ce que** le moteur d'entraînement (12) est relié à une couronne (38), le moteur auxiliaire (14) est relié à une roue solaire (36) et l'organe de transport (18) est relié à un porte-satellites (42) de l'engrenage sommateur planétaire (16).

4. Système d'entraînement selon l'une quelconque des revendications précédentes, **caractérisé en ce qu'**entre le moteur d'entraînement (12) et l'entrée du côté du moteur d'entraînement de l'engrenage sommateur est agencé un niveau à pignons (28) pour une multiplication ou une démultiplication de l'entraînement et/ou pour une inversion du sens d'entraînement.

5. Système d'entraînement selon l'une quelconque des revendications précédentes, **caractérisé en ce que** l'organe de transport (18) est une pompe ou un ventilateur, en particulier pour le transport d'huile ou de liquides de refroidissement ou pour le transport d'air.

6. Système d'entraînement selon l'une quelconque des revendications précédentes, **caractérisé en ce qu'**au moins un capteur (50, 52) destiné à mesurer au moins une grandeur d'état est un capteur destiné à mesurer la pression et/ou la température et/ou la quantité d'air acheminé et/ou la vitesse de circulation du milieu fluide.

7. Système d'entraînement selon l'une quelconque des revendications précédentes, **caractérisé en ce que** la puissance de transport de l'organe de transport (18) peut être commandée ou réglée par l'activation du moteur auxiliaire (14) conformément à une courbe caractéristique prédéfinissable de la puissance de transport en fonction de la température du milieu fluide et de la vitesse de rotation du moteur d'entraînement.

8. Système d'entraînement selon l'une quelconque des revendications précédentes, **caractérisé en ce que** la puissance de transport de l'organe de transport (18) peut être commandée ou réglée par l'activation du moteur auxiliaire (14) conformément à une valeur d'état théorique prédéfinissable, de préférence une pression théorique du milieu fluide, ou une courbe de la valeur d'état théorique en fonction de la vitesse de rotation du moteur d'entraînement, de préférence une courbe de pression théorique du milieu fluide.

9. Système d'entraînement selon l'une quelconque des revendications précédentes, **caractérisé en ce qu'**entre le moteur auxiliaire (14) et l'engrenage sommateur est montée une roue libre (58) qui absorbe un couple de rotation agissant sur le moteur auxiliaire (14).
